# EUROPEAN PATENT SPECIFICATION

(11) **EP 4 237 750 B1**
(45) Date of publication and mention of the grant of the patent: **25.06.2025**
(21) Application number: 21807226.2
(22) Date of filing: 29.10.2021
(51) Int. Cl.: F24D 18/00, F24D 19/10, F24D 13/02, H02J 3/14, H02J 3/32, F24D 101/40

(54) **ENERGY MANAGEMENT SYSTEM AND METHOD OF USE THEREOF**
ENERGIEVERWALTUNGSSYSTEM UND VERFAHREN ZUR VERWENDUNG DAVON
SYSTÈME DE GESTION D'ÉNERGIE ET PROCÉDÉ D'UTILISATION ASSOCIÉ

(30) Priority: 30.10.2020 GB 202017221
(43) Date of publication of application: 06.09.2023
(73) Proprietor: Iheat.Me Limited, Wetherby LS23 7BJ (GB)
(72) Inventor: ODDY, Adam, Leeds, Yorkshire LS22 5DZ (GB)
(74) Representative: Tomkinson, Alexandra
(86) International application number: PCT/GB2021/052806
(87) International publication number: WO 2022/090727

(56) References cited:
- EP-A1- 2 882 073
- EP-A2- 2 469 238
- WO-A1-2015/025122
- WO-A1-2018/185454
- US-A1- 2014 163 754

## Description

The invention to which this application relates is an energy management system and a method of use thereof.

A typical home in the UK will use over 80% of its entire annual energy supplied to it, to provide heating and hot water to that home. Most homes in the UK also currently utilise gas central heating. When gas is not available or preferable, most homes would then generally opt for an electric solution. However, the current power demand levels for electrically heated homes is too great for current battery technology to cope, and a typical electric heating solution would drain the stored energy in a battery very quickly. The addition an electric hot water system only worsens the speed at which the battery would be drained of its energy.

Currently, heating systems can be timed to switch on and off several time a day. Those times usually coincide with a typical morning and evening peak energy demand on the grid, which occurs every day. This creates a problem for electricity generation companies because the energy demand peaks will vary in magnitude and it is difficult to simply turn on and off electricity generators to match these peaks.

It is known that solar panels can be placed onto the roof of a property and in so doing be used to generate electricity for that property. It is also known that some solar panels can be linked to a battery such that they can charge the battery during the day and release the stored energy overnight.

At present, most solar panels are being used to feed electricity into the grid, for which the owner of the panel or panels is paid, such that the grid is less reliant on fossil fuels during the day.

The owner of the solar panels who also would also own a battery will find that once the battery is charged, the excess energy is also being fed into the grid and not being used by the property. The ability for an average homeowner to achieve energy independence has been hampered because of the power required to heat a home or to heat hot water all year round and the limitations of the available battery technology used to release energy when required.

Most central heating systems rely on convection to distribute heat. Electric heating devices such as radiators, convectors and other heat exchangers are well known and are used for domestic and commercial heating purposes. Electric radiators generally comprise an element through which electricity flows to generate infra-red radiation/heat. Infrared panels rely on radiation, which makes them an efficient heating system in some circumstances. Rather than heating the air via convection, an infrared panel delivers heat directly to the occupants and furnishings of the room. A person sitting in front of an infrared heating panel will feel warm, even if the air around them is still relatively cold. This can mean that in certain circumstances, much less electricity is required to be used than if the entire volume of the property in which the panels are located has to be heated, in order for the occupants to feel comfortable.

EP2882073 discloses an energy management system having power storage apparatus, which can include photovoltaic means, which charges and discharges power using a storage battery. Control apparatus communicates with the power storage apparatus and storage battery.

EP2469238 discloses a photovoltaic system including at least one photovoltaic module, an inverter and a control unit. The photovoltaic module can supply power to a battery. The control unit can adjust power to a first electrical consumer in such a way that little or no electrical power is fed into an electricity network.

US2014/0163754 discloses a system that allows regulation of an alternative energy source that is decoupled from a power grid. Excess power supply from the alternative energy source is stored in the energy storage device without releasing electrical power from the alternative energy source to the power grid.

WO2015/025122 discloses an electric heating system comprising a plurality of electric heaters, each heater having a control unit that allows communication with at least one other heater control unit of the heating system. The electric heating system allows pulsing of electricity between the heaters of the heating system.

WO2018/185454 discloses an energy management system including energy consuming devices and energy control means for controlling the supply of energy to the energy consuming devices. The control means are arranged to calculate the amount of energy each energy consuming device is using and predict the amount of energy it will need in future. The control means are arranged to obtain the predicted amount of energy required for the energy consuming devices.

It is therefore an aim of the present invention to provide an improved energy management system which overcomes the aforementioned problems associated with the prior art.

It is a further aim of the present invention to provide a method of using an improved energy management system which overcomes the aforementioned problems associated with the prior art.

According to a first aspect of the invention there is provided an energy management system arranged for use with a building or property according to claim 1.

Further typically, said electric central heating system includes one or more electric heating devices. In one embodiment, said electric heating devices include one or more infrared heating panels.

Thus, the system of the present invention solves the above problems by permitting an electric central heating system and/or an electric hot water system to exist within the power confines of a solar panel and power cell/battery combination, whilst still being able to provide sufficient power to the building or property in which the system is located such that direct connection of that building or property to the national grid is negated or at the very least substantially reduced.

In one embodiment, said building or property is a residential building. In other embodiments, said building may be a commercial property.

The control means is provided to enable energy delivered to the one or more heating elements or other appliances to be phased or pulsed over a predetermined period of time, in use. Typically, said period of time may be a 24-hour period. For example, energy allocation may be spread and distributed across a number of said heating elements or other appliances based on their predicted usage. Thus, during one period in, for example, a day, a first heating element or appliance may be used on a regular basis and so the control means is able to direct power/energy to that element/appliance. During periods of non-use, power/energy to that element/appliance is restricted, and redirected to other elements/appliances throughout the property which are now being used. The ability of the control means to phase or pulse the energy which is delivered, ensures that system can spread the load/power consumption of the building or property across the course of a day, which consequently avoids draining the power cell/battery and also avoids having surplus energy that would otherwise be stored by the power cell from being wasted or returned to the grid.

Consequently, a system according to the present invention would result in a smaller, flatter energy demand across 24 hours in a day, which is easier to plan for, and importantly permits a battery or power cell to run, for example, the central heating system and/or hot water system of a property.

In one embodiment, said control means is provided to monitor and control the activation and usage of the one or more heating elements or appliances, and associated circuitry within the property.

Typically, said one or more appliances may be monitored via the provision of one or more smart sockets or plugs arranged to be in communication with the control means.

In one embodiment, the control means is arranged to monitor the usage of the one or more heating elements or appliances. and compare the same to one or more properties of the system. Typically, such properties may include: battery/power cell capacity, available battery/power cell capacity, charging status and rate, and the time of day etc. Typically, the amount, degree and time of usage of the one or more heating elements or other appliances may also be monitored by the control means.

Preferably, the control means, upon assessing usage timings and patterns etc. of the one or more heating elements or other appliances, is arranged to determine which of the elements or appliances can be switched off/deactivated for a period of time to reduce overall energy consumption of the building or property. Thus, the overall load on the system can be reduced, thereby improving the life of the battery/power cell.

Typically, said control means includes computing means. In one embodiment, said control means includes a user interface. Typically, said user interface comprises display means and a user input means.

In one embodiment, said user interface permits a user to assume manual control of the system and customise system settings as desired.

In one embodiment, the computing means of the control means includes and runs a machine learning algorithm, provided to assess usage timings and patterns etc. of the one or more heating elements or other appliances and subsequently determine and/or predict the energy requirements throughout the property over the course of a period of time. Typically, said period of time may be a day. In other embodiments, the period of time may be a week, and the algorithm and consequently the system learns to recognize energy usage patterns on each day throughout the week. For example, energy usage within the property may have a relatively consistent profile over the course of the weekdays, and then a differing energy usage profile over the weekend, wherein a user is more likely to have prolonged period within the property during the day.

In one embodiment, said system, via the control means, is in communication with a central server located remotely of the property via the internet, mobile network, or the like.

Typically, said machine learning algorithm and/or other software associated with the system, may be updated via communication with said central server.

Typically, said control means is provided to monitor and assess charge levels in the power cell/battery and determine when to access power from the main grid to charge the power cell/battery. For example, such a feature would be implemented during periods of reduced, restricted or limited light where it may not be possible for the one or more solar panels to provide the required energy levels to the system.

In one embodiment, the system further includes one or more switch and/or monitoring units. Typically, said one or more switch and/or monitoring units are provided associated with one or more specific points or regions of the system. Further typically, said one or more switch and/or monitoring units are provided associated with the one or more solar panels, one or more power cells, one or more heating elements or appliances of the system and/or a connection to the main grid.

Preferably, said one or more switch and/or monitoring units are in direct communication with the control means. Typically, said one or more switch and/or monitoring units include one or more sensors located therein, arranged to monitor and detect energy flow and/or temperature information, and relay said information to the control means, in use.

In one embodiment, said one or more switch and/or monitoring units include mechanical, electrical and/or other switching capabilities which are arranged to be used, via communication with the control means, to isolate, restrict, activate/deactivate the points/regions of the system with which they are located.

In one embodiment, said one or more switch and/or monitoring units include may include a user interface, including display means. Typically, the user interface may further include user input means.

In another embodiment, the system may be arranged to be connected with other such systems located with nearby buildings or properties. Typically, such connection creates a localized, substantially off-grid network. In one embodiment, the connection of multiple systems permits connected properties to buy and/or sell surplus energy to one another, further reducing dependency on the main grid.

In another aspect of the present invention, there is provided a method of using an energy management system according to claim 12.

In one embodiment, the control means, assesses usage timings and patterns etc. of the one or more heating elements or appliances, and subsequently determines which of the elements or appliances can be switched off/deactivated for a period of time to reduce overall energy consumption of the building or property.

In one embodiment, said control means monitors and assesses charge levels in the power cell/battery and determines when to access power from the main grid to charge the power cell/battery, if required.

In one embodiment, the system further includes one or more switch and/or monitoring units provided associated with one or more specific points or regions of the system, and which are in direct communication with the control means. Typically, said one or more switch and/or monitoring units are provided associated with the one or more solar panels, the one or more power cells, the one or more heating elements or appliances of the system and/or a connection to the main grid and which are in direct communication with the control means.

Typically, said one or more switch and/or monitoring units include one or more sensors located therein which in use monitor and detect energy flow and/or temperature information, and relay said information to the control means.

In one embodiment, said one or more switch and/or monitoring units include mechanical, electrical and/or other switching capabilities which isolate, restrict, activate/deactivate the points/regions of the system with which they are located, via communication with the control means.

Embodiments of the present invention will now be described with reference to the accompanying figures, wherein:

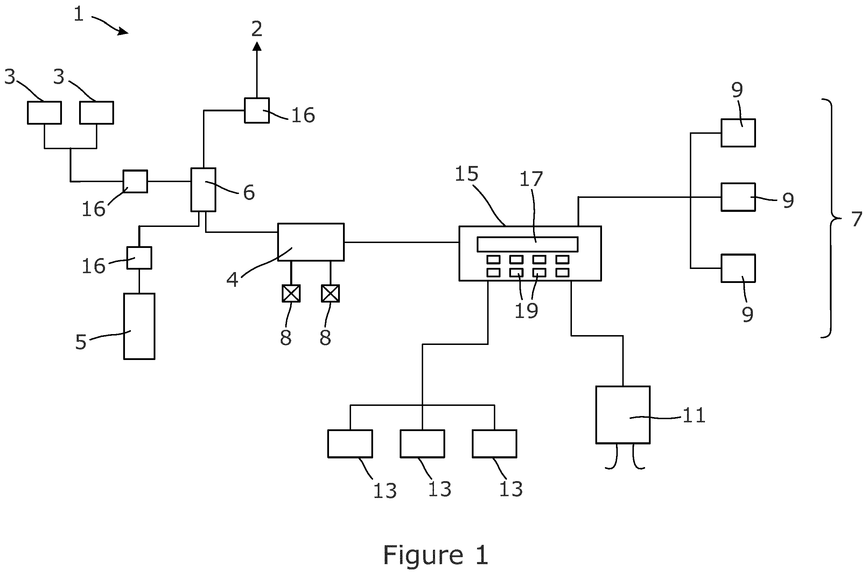

Figure 1 illustrates a schematic of an energy management system in accordance with an embodiment of the present invention.

Referring now to Figure 1, the invention provides an energy management system 1 provided for location throughout a building or property, which enables the building to collect, store and use its own energy supply partially or completely independently from the main grid 2 in a greatly improved and more efficient manner that that which has been previously available, although a connection to the main grid 2 is still provided for in stances where additional power is required. The building may be a residential property or in some embodiments the system can be used in a commercial property. The system 1 includes one or more solar panels 3 provided to capture solar energy and transfer the same for storage in one or more power cells or batteries 5 provided. One or more heating elements or other appliances are provided throughout the property and connected to the battery 5, enabling stored energy to be transferred to the elements or appliances for their use / consumption. The system 1 is also connected with the property's fuse box/consumer unit 4 and inverter 6. The heating elements can be provided as an electric central heating system 7 comprising one or more electric heating devices 9, or an electric hot water system 11. In particular, the electric heating devices 9 are preferably provided as a number of infrared heating panels located throughout the property. Further, other household appliances may also be connected to the system 1 for use, via the provision of one or more smart sockets or plugs 13. There may be some circuits/appliances 8 within the property which are not connected with or monitored by the system 1 and are thus separate from the system and may connect to the main grid 2 via the fuse box 4.

The system 1 further includes control means in the form of an intelligent controller 15 and in some embodiments additionally one or more remote monitoring intelligent switches 16, which are provided but not limited to monitor energy flow, storage and battery capacity within the system 1, monitor energy usage throughout the system 1, and determine, based on the energy storage levels in/capacity of the battery 5 and the current and predicted usage of the same, how best to allocate and/or distribute energy to the various components and elements 7, 9, 11, 13 throughout the system 1. The assessment of the various aspects of the system 1 and subsequent decision-making process by the controller 15 as to how future energy usage, allocation and/or distribution of energy to the various elements of the system 1 is achieved via the incorporation of a machine learning algorithm. Over time and as the system 1 is used by persons within the property, the algorithm learns and adapts to the usage patterns of those within the property, becoming better able to predict the energy requirements throughout the property over the course of a period of time, for example, a day, week etc. Further, the system 1, via the controller 15, may connect via the internet, mobile network or the like to a central server located remotely of the property, wherein the software and base algorithm of the system 1 may be updated periodically, without direct manual input. Each update will include metrics based on increased available data received over time which equates to an "average" user profile, which in most cases will provide the machine learning algorithm with a more accurate base from which to start, therefore requiring fewer adaptations and less time to predict and arrive at a profile which matches the specific user(s) within a property.

The system 1 therefore, provides a greatly improved degree of energy efficiency of a property in which it is located, by permitting an electric central heating system 7 and/or an electric hot water system 11 to exist within the power confines of a solar panel or panels 3 and battery 5 combination, whilst still being able to provide sufficient power to the building or property in which the system 1 is located such that direct connection of that building or property to the national grid 2 is negated or at the very least substantially reduced. This efficiency only improves over time as the machine learning algorithm forming part of the system 1 learns and adapts to the specific energy needs/profile of the user(s) within that property.

The controller 15 is arranged to control the delivery of energy/electricity to and from the battery 5, and consequently, the property and various appliances/heating components 7, 9, 11, 13 therein. This can be more efficiently achieved via the provision of one or more of the intelligent switches 16, which may monitor specific points/regions of the system 1 and communicate directly with the controller 15, via wired connection or wirelessly. The switches 16 include on board sensors which monitor and relay energy flow information to the controller 15. Further information such as temperature, frequency etc. may also be relayed in some embodiments. The switches further include mechanical, electrical and/or other switching capabilities which may be utilised, via communication with the controller 15, to isolate, restrict, activate/deactivate the points/regions of the system 1 with which they are located. The controller 15 further serves to enable energy to be delivered to the heating system 7, hot water system 11, or other appliances 13 to be phased or pulsed over a prolonged period of time, for example, a day. The controller 15 ensures energy allocation may be spread and distributed across a number of the various elements or appliances 7, 9, 11, 13 based on their predicted usage. Thus, during a first period of time in a day, a first element 7, 9, 11, 13 may be used regularly at that time of day and so the intelligent controller 15 is able to direct power/energy to that element/appliance 7, 9, 11, 13. During periods of non-use, power/energy to that element/appliance 7, 9, 11, 13 is restricted, and redirected to other elements/appliances throughout the property, which may now be required to be used. This can repeat for the various heating elements and appliances 7, 9, 11, 13 throughout the day. The ability of the intelligent controller 15 to phase or pulse the energy which is delivered, ensures that system 1 can optimally spread the load/power consumption of the property across the course of a day, which consequently avoids draining the battery 5 and also avoids having surplus energy that would otherwise be stored by the battery 5 from being wasted or returned to the grid 2. Further, the system 1 is specifically geared to ensure power delivery does not exceed the power availability from the battery 5. Consequently, a system 1 according to the present invention would result in a smaller, flatter energy demand across 24 hours in a day, which is easier to plan for, and importantly permits the battery 5 to run the central heating system 7 and/or the hot water system 11 of property unaided either permanently or for sustained periods of time.

The controller 15 monitors and controls the activation and usage of the elements 7, 9, 11, 13 located throughout the property, and their associated circuitry. The appliances can be monitored via smart sockets or plugs 13 which are provided. Additionally, the controller 15, in use, monitors the amount, degree and time of usage of the elements 7, 9, 11, 13 and compares that usage to one or more properties of the system, such as the total battery capacity, available battery capacity, battery charging status and rate, and the time of day etc. This then allows the controller 15 to determine how and where to allocate/distribute energy for required / prioritized elements to be used. Upon assessing usage timings and patterns etc. of the various elements 7, 9, 11, 13 the controller 15 can then determine which of those elements 7, 9, 11, 13 can be switched off/deactivated for a period of time to reduce the overall energy consumption of the system 1 within the property. Thus, the overall load on the system can be reduced, which serves also to improve the overall life of the battery 5.

The controller 15 is also provided to monitor and assess the charge levels within the battery 5 and determine, when required, to access power from the main grid 2 to charge the battery 5. For example, this could be implemented during periods of reduced, restricted or limited light where it may not be possible for the solar panels 3 located with the property to capture and subsequently provide the required energy levels to the battery 5 and thus the system 1.

The intelligent controller 15 is provided with a user interface, which includes a display screen 17 and a user input portion, which can be provided as a number of buttons/keys 19, or the display screen 17 itself can be provided to be a touch screen enabling user interaction. In other embodiments, the controller 15 can be Wi-Fi enabled and/or provided with other or additional wireless connection capabilities, such as Bluetooth^{®}, LTE and other radio-based capabilities, and be accessed/controlled by a user via personal mobile device, computer and/or a mobile or desktop application therefor. The interface enables the user to assume manual control of the system 1 and customise system settings as they choose. It also enables access to engineers or service personnel should the system require servicing, maintenance or repair both locally on-site, and remotely.

Finally, in some embodiments of the invention, the system 1 may be expanded and connected with other such systems located with nearby buildings or properties. This would serve to create a localized, substantially off-grid network and also enable connected properties to buy and/or sell surplus energy to one another, further reducing dependency on the main grid 2.

## Claims

1. An energy management system (1) arranged for use with a building or property, said system including:
one or more heating elements or appliances located throughout said building or property and including an electrical central heating system (7) and/or an electric hot water system (11);
one or more solar panels (3) fitted with the property; and
one or more power cells (5) in communication with said one or more heating elements or appliances, and said one or more power cells (5), arranged to receive and store energy from the one or more solar panels (3), and distribute the same to the one or more heating elements or appliances,
wherein the system further includes control means (15) arranged to:
monitor energy storage and capacity of the one or more power cells (5) within the system (1);
monitor energy usage throughout the system (1); and
determine, based on the energy storage/capacity and current and predicted usage, how best to allocate and/or distribute energy throughout the system (1), in use; and wherein said control means (15) is further provided to enable energy delivered to the one or more heating elements or other appliances via the one or more power cells (5) to be phased or pulsed over a predetermined period of time, in use, so as to avoid draining the one or more power cells (5) of energy.

2. A system according to claim 1, wherein said electric central heating system (7) includes one or more electric heating devices (9) in the form of one or more infrared heating panels.

3. A system according to claim 1, wherein said control means (15) is provided to do any or any combination of:
monitor and control the activation and usage of the one or more heating elements or appliances, and associated circuitry within the property, in use;
monitor one or more of: the amount, degree, usage and time of usage of the one or more heating elements or other appliances, and compare the same to one or more properties of the system (1), in use;
determine which of the heating elements or appliances can be switched off/deactivated for a period of time to reduce overall energy consumption of the building or property, in use; or
monitor and assess charge levels in the one or more power cells (5) and determine when to access power from the main grid to charge the one or more power cells (5), in use.

4. A system according to claim 1, wherein said one or more appliances are monitored via the provision of one or more smart sockets or plugs (13) arranged to be in communication with the control means (15), in use.

5. A system according to claim 3, wherein such properties include: battery/power cell capacity, available battery/power cell capacity, charging status and rate, and the time of day.

6. A system according to claim 1, wherein said control means (15) includes computing means.

7. A system according to claim 6, wherein the computing means of the control means (15) includes and runs a machine learning algorithm, provided to assess usage timings and patterns of the one or more heating elements or other appliances and subsequently determine and/or predict the energy requirements throughout the property over the course of a period of time.

8. A system according to claim 1, wherein the system (1) further includes one or more switch (16) and/or monitoring units, provided associated with one or more specific points or regions of the system (1).

9. A system according to claim 8, wherein the one or more specific points or regions of the system (1) include the one or more solar panels (3), the one or more power cells (5), the one or more heating elements or appliances of the system (1) and/or a connection to the main grid (2).

10. A system according to claim 8, wherein said one or more switch (16) and/or monitoring units are in direct communication with said control means (15); include one or more sensors located therein, arranged to monitor and detect energy flow and/or temperature information, and relay said information to the control means (15), in use; and/or include mechanical, electrical and/or other switching capabilities which are arranged to be used, via communication with the control means (15), to isolate, restrict, activate/deactivate the points or regions of the system (1) with which they are located.

11. A system according to claim 1, wherein the system (1) is arranged to be connected with other such systems located with nearby buildings or properties, thereby creating a localized, substantially off-grid network.

12. A method of using an energy management system (1) as defined in claims 1-11, said method including the steps of:
absorbing solar energy via the one or more solar panels (3); transferring and storing said energy to the one or more power cells (5); and
using the stored energy in the one or more power cells (5) to power the one or more heating elements or appliances located throughout said building or property, the one or more heating elements or appliances including an electric central heating system (7) and/or an electric hot water system (11);
wherein said control means (15) continuously monitor energy storage and power cell capacity within the system (1), and monitor energy usage throughout the system (1), subsequently determining how best to allocate and/or distribute energy throughout the system (1); and wherein said control means (15) is further provided to enable energy delivered to the one or more heating elements or appliances via the one or more power cells (5) to be phased or pulsed over a predetermined period of time, in use, so as to avoid draining the one or more power cells (5) of energy.

13. A method according to claim 12, wherein said control means (15) is provided to do any or any combination of: assess usage timings and patterns of the one or more heating elements or appliances, and subsequently determines which of
heating elements or appliances can be switched off/deactivated for a period of time to reduce overall energy consumption of the building or property; or monitor and assess charge levels in the power cell (5)/battery and determines when to access power from the main grid (2) to charge the power cell (5)/battery, if required.

14. A method according to claim 12, wherein the system (1) further includes one or more switch (16) and/or monitoring units provided associated with one or more specific points or regions of the system (1), and which are in direct communication with the control means (15); wherein said one or more switch (16) and/or monitoring units include one or more sensors located therein which monitor and detect energy flow and/or temperature information, and relay said information to the control means (15); and/or wherein said one or more switch (16) and/or monitoring units include mechanical, electrical and/or other switching capabilities which isolate, restrict, activate/deactivate the points/regions of the system (1) with which they are located, via communication with the control means (15).

## Patentansprüche

1. Energieverwaltungssystem, das zur Verwendung mit einem Gebäude oder einer Immobilie angeordnet ist, wobei das genannte System Folgendes aufweist:
ein oder mehrere Heizelemente oder Geräte, die sich überall in dem/der genannten Gebäude oder Immobilie befinden und ein elektrisches Zentralheizungssystem (7) und/oder ein elektrisches Warmwassersystem (11) aufweisen;
ein oder mehrere Solarkollektoren (3), mit denen die Immobilie versehen ist; und
eine oder mehrere Batteriezellen (5), die mit dem/den genannten einen oder mehreren Heizelement(en) oder Gerät(en) in Kommunikation stehen, und wobei die genannte(n) eine oder mehreren Batteriezelle(n) (5) zum Aufnehmen und Speichern von Energie von dem/den einen oder mehreren Solarkollektor(en) (3) und zum Verteilen derselben an das/die eine oder mehreren Heizelement(e) oder Gerät(e) angeordnet sind,
wobei das System ferner ein Steuerungsmittel (15) aufweist, das angeordnet ist zum:
Überwachen von Energiespeicherung und Kapazität der einen oder mehreren Batteriezellen (5) in dem System (1);
Überwachen der Energienutzung überall im System (1); und
Bestimmen, auf Basis der Energiespeicherung/Kapazität und aktueller und vorhergesagter Nutzung, wie Energie im Gebrauch überall in dem System (1) am besten zuzuteilen und/oder zu verteilen ist; und
wobei das genannte Steuerungsmittel (15) ferner bereitgestellt ist, um im Gebrauch zu ermöglichen, dass an das eine oder die mehreren Heizelement(e) oder andere(n) Gerät(e) über die eine oder mehreren Batteriezelle(n) (5) gelieferte Energie über eine vorbestimmte Zeitspanne getaktet oder gepulst wird, um das Entladen der einen oder mehreren Batteriezelle(n) (5) zu vermeiden.

2. System nach Anspruch 1, wobei das genannte elektrische Zentralheizungssystem (7) eine oder mehrere elektrische Heizvorrichtung(en) (9) in der Form von einem oder mehreren Infrarot-Heizelement(en) aufweist.

3. System nach Anspruch 1, wobei das genannte Steuerungsmittel (15) zu einem oder einer Kombination der folgenden bereitgestellt ist:
Überwachen und Steuern der Aktivierung und Nutzung des einen oder der mehreren Heizelemente oder Geräte und zugeordneter Schaltungen in der Immobilie im Gebrauch;
Überwachen von einem oder mehreren von: der Menge, dem Grad, der Nutzung und der Nutzungszeit des einen oder der mehreren Heizelemente oder anderen Geräte, und Vergleichen derselben mit einer oder mehreren Eigenschaften des Systems (1) im Gebrauch;
Bestimmen, welches der Heizelemente oder Geräte im Gebrauch für eine Zeit abgeschaltet/deaktiviert werden kann, um den Energiegesamtverbrauch des Gebäudes oder der Immobilie zu verringern; oder
Überwachen und Bewerten von Ladeständen in der einen oder den mehreren Batteriezelle(n) (5) und Bestimmen, wann auf Strom aus dem Hauptstromnetz zuzugreifen ist, um die eine oder mehreren Batteriezelle(n) (5) zu laden, im Gebrauch.

4. System nach Anspruch 1, wobei das/die genannte(n) eine oder mehreren Gerät(e) im Gebrauch über die Bereitstellung von einer/einem oder mehreren intelligenten Steckdose(n) oder Stecker(n) (13) überwacht werden, die angeordnet sind, um mit dem Steuerungsmittel (15) in Kommunikation zu stehen.

5. System nach Anspruch 3, wobei die folgenden zu den derartigen Eigenschaften zählen: Batterie-/Batteriezellenkapazität, verfügbare Batterie-/Batteriezellenkapazität, Ladestatus und -geschwindigkeit und die Tageszeit.

6. System nach Anspruch 1, wobei das genannte Steuerungsmittel (15) ein Rechenmittel aufweist.

7. System nach Anspruch 6, wobei das Rechenmittel des Steuerungsmittels (15) einen Algorithmus des maschinellen Lernens aufweist und abarbeitet, der zum Bewerten von Nutzungszeiten und -mustern des/der einen oder mehreren Heizelemente oder anderen Geräte und anschließend Bestimmen und/oder Vorhersagen der Energieanforderungen überall in der Immobilie im Laufe einer Zeitspanne bereitgestellt ist.

8. System nach Anspruch 1, wobei das System (1) ferner einen oder mehrere Schalter (16) und/oder Überwachungseinheiten aufweist, die in Zuordnung zu einem/einer oder mehreren spezifischen Punkt(en) oder Region(en) des Systems (1) bereitgestellt sind.

9. System nach Anspruch 8, wobei der/die eine oder mehreren spezifische(n) Punkt(e) oder Region(en) des Systems (1) den einen oder die mehreren Solarkollektor(en) (3), die eine oder mehreren Batteriezelle(n) (5), das/die eine oder mehreren Heizelement(e) oder Gerät(e) des Systems (1) und/oder eine Verbindung mit dem Hauptstromnetz (2) aufweisen.

10. System nach Anspruch 8, wobei der/die genannte(n) eine oder mehreren Schalter (16) und/oder Überwachungseinheit(en) in direkter Kommunikation mit dem genannten Steuerungsmittel (15) stehen; einen oder mehrere darin befindliche(n) Sensor(en) aufweisen, die im Gebrauch zum Überwachen und Erkennen von Energiefluss- und/oder Temperaturinformationen und zum Weiterleiten der genannten Informationen an das Steuerungsmittel (15) angeordnet sind; und/oder mechanische, elektrische und/oder andere Schaltmöglichkeiten aufweisen, die angeordnet sind, um über Kommunikation mit dem Steuerungsmittel (15) zum Isolieren, Einschränken, Aktivieren/Deaktivieren der Punkte oder Regionen des Systems (1), an/in denen sie sich befinden, verwendet zu werden.

11. System nach Anspruch 1, wobei das System (1) angeordnet ist, um mit anderen derartigen Systemen verbunden zu werden, die sich in nahegelegenen Gebäuden oder Immobilien befinden, um dadurch ein lokalisiertes, im Wesentlichen vom Versorgungsnetz abgekoppeltes Netzwerk entstehen zu lassen.

12. Verfahren zur Verwendung eines Energieverwaltungssystems (1) nach den Ansprüchen 1 bis 11, wobei das genannte Verfahren die folgenden Schritte aufweist:
Absorbieren von Sonnenenergie über den einen oder die mehreren Solarkollektor(en) (3);
Übertragen und Speichern der genannten Energie zu bzw. in der einen oder den mehreren Batteriezelle(n) (5); und
Verwenden der gespeicherten Energie in der einen oder den mehreren Batteriezellen (5) zum Betreiben des einen oder der mehreren Heizelemente oder Geräte, die sich in dem/der genannten Gebäude oder Immobilie befinden, wobei das eine oder die mehreren Heizelement(e) oder Gerät(e) ein elektrisches Zentralheizungssystem (7) und/oder ein elektrisches Warmwassersystem (11) aufweisen;
wobei das genannte Steuerungsmittel (15) kontinuierlich die Energiespeicherung und Batteriezellenkapazität im System (1) überwacht und die Energienutzung überall im System (1) überwacht, anschließend bestimmt, wie Energie überall im System (1) am besten zuzuteilen und/oder zu verteilen ist; und wobei das genannte Steuerungsmittel (15) ferner bereitgestellt ist, um im Gebrauch zu ermöglichen, dass an das eine oder die mehreren Heizelement(e) oder Gerät(e) über die eine oder mehreren Batteriezelle(n) (5) gelieferte Energie über eine vorbestimmte Zeitspanne getaktet oder gepulst wird, um das Entladen der einen oder mehreren Batteriezelle(n) (5) zu vermeiden.

13. Verfahren nach Anspruch 12, wobei das genannte Steuerungsmittel (15) zu einem oder einer Kombination der folgenden bereitgestellt ist: Bewerten von Nutzungszeiten und -mustern des/der einen oder mehreren Heizelemente oder Geräte und anschließend Bestimmen, welches der Heizelemente oder Geräte für eine Zeitspanne abgeschaltet/deaktiviert werden kann, um den Energiegesamtverbrauch des Gebäudes oder der Immobilie zu verringern; oder Überwachen und Bewerten von Ladeständen in der Batteriezelle (5)/Batterie und Bestimmen, wann auf Strom aus dem Hauptstromnetz (2) zuzugreifen ist, um die Batteriezelle (5)/Batterie zu laden, falls erforderlich.

14. Verfahren nach Anspruch 12, wobei das System (1) ferner einen oder mehrere Schalter (16) und/oder Überwachungseinheiten aufweist, die in Zuordnung zu einem/einer oder mehreren spezifischen Punkt(en) oder Region(en) des Systems (1) bereitgestellt sind und die in direkter Kommunikation mit dem Steuerungsmittel (15) stehen; wobei der/die genannte(n) eine oder mehreren Schalter (16) und/oder Überwachungseinheit(en) einen oder mehrere darin befindliche(n) Sensor(en) aufweisen, die Energiefluss- und/oder Temperaturinformationen überwachen und erkennen und die genannten Informationen an das Steuerungsmittel (15) weiterleiten; und/oder wobei der/die genannte(n) eine oder mehreren Schalter (16) und/oder Überwachungseinheit(en) mechanische, elektrische und/oder andere Schaltmöglichkeiten aufweisen, die die Punkte/Regionen des Systems (1), an denen sie sich befinden, über Kommunikation mit dem Steuerungsmittel (15) isolieren, einschränken, aktivieren/deaktivieren.

## Revendications

1. Système de gestion d'énergie (1) agencé pour une utilisation avec un bâtiment ou une propriété, ledit système incluant :
un ou plusieurs éléments ou appareils de chauffage situés dans l'ensemble dudit bâtiment ou de ladite propriété et incluant un système de chauffage central électrique (7) et /ou un système d'eau chaude électrique (11) ;
un ou plusieurs panneaux solaires (3) installés sur la propriété ; et
une ou plusieurs cellules de puissance (5) en communication avec lesdits un ou plusieurs éléments ou appareils de chauffage, et lesdites une ou plusieurs cellules de puissance (5) étant agencées pour recevoir et stocker de l'énergie provenant des un ou plusieurs panneaux solaires (3), et distribuer celle-ci aux un ou plusieurs éléments ou appareils de chauffage,
le système incluant en outre un moyen de commande (15) agencé pour :
surveiller le stockage et la capacité d'énergie des une ou plusieurs cellules de puissance (5) au sein du système (1) ;
surveiller l'usage d'énergie dans l'ensemble du système (1) ; et
déterminer, sur la base du stockage/de la capacité d'énergie et de l'usage actuel et prédit, comment allouer et/ou distribuer au mieux l'énergie dans l'ensemble du système (1), lors de l'utilisation ; et dans lequel ledit moyen de commande (15) est prévu en outre pour permettre à l'énergie délivrée aux un ou plusieurs éléments ou autres appareils de chauffage par l'intermédiaire des une ou plusieurs cellules de puissance (5), d'être phasée ou pulsée pendant un intervalle de temps prédéterminé, lors de l'utilisation, de sorte à éviter l'épuisement d'énergie des une ou plusieurs cellules de puissance (5).

2. Système selon la revendication 1, dans lequel ledit système de chauffage central électrique (7) inclut un ou plusieurs dispositifs de chauffage électrique (9) sous la forme d'un ou de plusieurs panneaux de chauffage à infrarouge.

3. Système selon la revendication 1, dans lequel ledit moyen de commande (15) est prévu pour effectuer n'importe laquelle des actions ou n'importe quelle combinaison d'actions consistant à :
surveiller et commander l'activation et l'usage des un ou plusieurs éléments ou appareils de chauffage, et la circuiterie associée au sein de la propriété, lors de l'utilisation ;
surveiller un ou plusieurs éléments parmi : quantité, degré, usage et temps d'usage des un ou plusieurs éléments ou autres appareils de chauffage, et comparer ceux-ci aux une ou plusieurs propriétés du système (1), lors de l'utilisation ;
déterminer lequel des éléments ou appareils de chauffage peut être mis hors tension/désactivé pendant un certain intervalle de temps afin de réduire la consommation énergétique globale du bâtiment ou de la propriété, lors de l'utilisation ; ou
surveiller et évaluer les niveaux de charge dans les une ou plusieurs cellules de puissance (5) et déterminer le moment où on peut accéder à la puissance provenant du réseau principal afin de charger les une ou plusieurs cellules de puissance (5), lors de l'utilisation.

4. Système selon la revendication 1, dans lequel lesdits un ou plusieurs appareils sont surveillés grâce à la fourniture d'une ou de plusieurs douilles ou prises intelligentes (13) agencées pour être en communication avec le moyen de commande (15), lors de l'utilisation.

5. Système selon la revendication 3, dans lequel de telles propriétés incluent : capacité de cellule de puissance/de batterie, capacité disponible de la cellule de puissance/de la batterie, statut et régime de charge, et heure du jour.

6. Système selon la revendication 1, dans lequel ledit moyen de commande (15) inclut un moyen informatique.

7. Système selon la revendication 6, dans lequel le moyen informatique du moyen de commande (15) inclut et exécute un algorithme d'apprentissage machine, prévu pour évaluer les temps et schémas d'usage des un ou plusieurs éléments ou autres appareils de chauffage et déterminer et/ou prédire ultérieurement les exigences en énergie dans l'ensemble de la propriété pendant la totalité d'une période de temps.

8. Système selon la revendication 1, le système (1) incluant en outre une ou plusieurs unités de commutation (16) et/ou de surveillance, qui sont fournies associées à un/e ou plusieurs points ou régions spécifiques du système (1).

9. Système selon la revendication 8, dans lequel les unie ou plusieurs points ou régions spécifiques du système (1) incluent les un ou plusieurs panneaux solaires (3), les une ou plusieurs cellules de puissance (5), les un ou plusieurs éléments ou appareils de chauffage du système (1) et/ou une connexion au réseau principal (2).

10. Système selon la revendication 8, dans lequel lesdites une ou plusieurs unités de commutation (16) et/ou de surveillance sont en communication directe avec le moyen de commande (15) ; incluent un ou plusieurs capteurs qui sont situés dans celles-ci, agencés pour surveiller et détecter des informations concernant le flux d'énergie et/ou la température, et relayer lesdites informations au moyen de commande (15), lors de l'utilisation ; et/ou incluent des capacités mécaniques, électriques et/ou autres opérations de commutation qui sont agencées pour être utilisées, par l'intermédiaire d'une communication avec le moyen de commande (15), pour isoler, restreindre, activer/désactiver les points ou régions du système (1) au niveau duquel elles sont installées.

11. Système selon la revendication 1, le système (1) étant agencé pour être connecté à d'autres systèmes semblables situés dans des bâtiments ou propriétés proches, créant ainsi un réseau localisé qui est substantiellement hors réseau principal.

12. Procédé d'utilisation d'un système de gestion d'énergie (1) tel que défini dans les revendications 1 à 11, ledit procédé incluant les étapes consistant à :
absorber l'énergie solaire par l'intermédiaire des un ou plusieurs panneaux solaires (3) ;
transférer et stocker ladite énergie sur les une ou plusieurs cellules de puissance (5) ; et
utiliser l'énergie stockée dans les une ou plusieurs cellules de puissance (5) pour alimenter les un ou plusieurs éléments ou appareils de chauffage situés dans l'ensemble dudit bâtiment ou de ladite propriété, les un ou plusieurs éléments ou appareils de chauffage incluant un système de chauffage central électrique (7) et/ou un système d'eau chaude électrique (11) ;
dans lequel ledit moyen de commande (15) surveille en continu la capacité de stockage d'énergie et des cellules de puissance au sein du système (1), et surveille l'usage d'énergie dans l'ensemble du système (1), déterminant ultérieurement comment allouer et/ou distribuer au mieux l'énergie dans l'ensemble du système (1) ; et dans lequel ledit moyen de commande (15) est prévu en outre pour permettre à l'énergie délivrée aux un ou plusieurs éléments ou appareils de chauffage, par l'intermédiaire des une ou plusieurs cellules de puissance (5), d'être phasée ou pulsée pendant un intervalle de temps prédéterminé, lors de l'utilisation, de sorte à éviter l'épuisement d'énergie des une ou plusieurs cellules de puissance (5).

13. Procédé selon la revendication 12, dans lequel ledit moyen de commande (15) est prévu pour effectuer n'importe laquelle des actions ou n'importe quelle combinaison d'actions consistant à : évaluer les temps et schémas d'usage des un ou plusieurs éléments ou appareils de chauffage, et déterminer ultérieurement lequel des éléments ou appareils de chauffage peut être mis hors tension/désactivé pendant un certain intervalle de temps afin de réduire la consommation énergétique globale du bâtiment ou de la propriété ; ou surveiller et évaluer les niveaux de charge dans la cellule de puissance (5)/la batterie et déterminer le moment où on peut accéder à la puissance provenant du réseau principal (2) afin de charger la cellule de puissance (5)/la batterie, en cas de besoin.

14. Procédé selon la revendication 12, le système (1) incluant en outre une ou plusieurs unités de commutation (16) et/ou de surveillance associées à un/e ou plusieurs points ou régions spécifiques du système (1), et qui sont en communication directe avec le moyen de commande (15) ; dans lequel lesdites une ou plusieurs unités de commutation (16) et/ou de surveillance incluent un ou plusieurs capteurs situés dans celles-ci qui surveillent et détectent des informations concernant le flux d'énergie et/ou la température, et relayent lesdites informations au moyen de commande (15) ; et/ou dans lequel lesdites une ou plusieurs unités de commutation (16) et/ou de surveillance incluent des capacités mécaniques, électriques et/ou autres opérations de commutation qui isolent, restreignent, activent/désactivent les points/régions du système (1) au niveau duquel elles sont installées, par l'intermédiaire d'une communication avec le moyen de commande (15).
